# EUROPÄISCHE PATENTANMELDUNG

(11) **EP 3 275 712 A1**
(43) Veröffentlichungstag der Anmeldung: **31.01.2018**
(21) Anmeldenummer: 17182916.1
(22) Anmeldetag: 25.07.2017
(51) Int. Cl.: B60K 13/04, B60K 15/03, F01N 3/20, H05B 3/14, H05B 3/56

(54) **ADDITIVBEHÄLTER FÜR EIN SCR-SYSTEM**

(30) Priorität: 27.07.2016 DE 102016113863
(71) Anmelder: Kolektor Group d.o.o., 5280 Idrija (SI)
(72) Erfinder: Kumar, Ludvik, 1371 Logatec (SI); Drmota Petric, Ana, 5280 Idrija (SI)
(74) Vertreter: Grättinger Möhring von Poschinger Patentanwälte Partnerschaft

(57) **Zusammenfassung**

Ein Additivbehälter für ein der KFZ-Abgasreinigung dienendes SCR-System umfasst eine einen Innenraum umschließende Behälterwand, eine Pump- und Dosiereinheit sowie eine elektrische Heizeinheit (1). Diese weist mindestens einen Abschnitt (4, 5) eines selbstregelnden Polymerheizkabels (20) mit zwei mit Abstand zueinander in ein leitfähiges Polymermaterial eingebetteten, an eine Spannungsquelle anschließbaren metallischen Leitdrähten (12) auf. Der mindestens eine Polymerheizkabel-Abschnitt (4, 5) ist dabei dergestalt an einer sich über zumindest einen wesentlichen Teil der Höhe des Innenraumes des Additivbehälters erstreckenden Trägerstruktur (3) fixiert, dass sich auf unterschiedlichen Höhen des Innenraumes des Additivbehälters Polymerheizkabel (20) befindet. Die Trägerstruktur (3) umfasst einen topfförmig ausgeführten Bereich (6) mit einer Wand (7) und einem Boden (8) und ist in den Innenraum des Additivbehälters hineinragend dergestalt mit der Behälterwand verbunden, dass ihr Innenraum (10) gegenüber dem übrigen Innenraum des Additivbehälters dicht abgeschlossen ist.

## Beschreibung

Die vorliegende Erfindung betrifft einen Additivbehälter für ein der KFZ-Abgasreinigung dienendes SCR-System, umfassend eine einen Innenraum umschließende Behälterwand, eine Pump- und Dosiereinheit sowie eine elektrische Heizeinheit.

Additivbehälter der vorstehend genannten Art sind in verschiedenen Ausführungen bekannt. Im Hinblick auf den Stand der Technik ist beispielsweise zu verweisen auf die WO 2014/135399 A1, WO 2015/011169 A1, DE 102012110585 A1, DE 102008015599 A1, DE 102008042954 A1 und DE 102008048798 A1. In diesen Dokumenten wird insbesondere auch - mehr oder weniger ausführlich - die Notwendigkeit für eine Heizeinheit erläutert, um ein der KFZ-Abgasreinigung dienendes SCR-System auch bei niedrigen Umgebungstemperaturen betriebsfähig zu erhalten. Auch die WO 2011/076927 A1 befasst sich mit einem Additivbehälter der eingangs angegeben Art. Das betreffende Heizsystem umfasst dabei einen - insbesondere aus einer Kupfer-Nickel-Legierung oder Edelstahl bestehenden - Widerstands-Heizdraht. Dieser erstreckt sich schraubenförmig mit jeweils mehreren Windungen innerhalb und außerhalb eines nach oben, zum Innenraum des Additivbehälters hin offenen Reservoirs, wobei durch Halteelemente ein vorgegebener Abstand zu der Wand des Reservoirs gesichert wird, und zusätzlich mit mehreren weiteren Windungen spiralig in der Nähe des Behälterbodens um das Reservoir herum.

Die vorstehende Erfindung hat sich zur Aufgabe gemacht, einen hinsichtlich seiner praxisrelevanten Eigenschaften verbesserten Additivbehälter der gattungsgemäßen Art bereitzustellen.

Gelöst wird die vorstehende Aufgabenstellung gemäß der vorliegenden Erfindung, wie im Anspruch 1 angegeben, indem bei einem Additivbehälter der eingangs dargelegten Art kumulativ die Heizeinheit mindestens einen Abschnitt eines selbstregelnden Polymerheizkabels mit zwei mit Abstand zueinander in ein leitfähiges Polymermaterial eingebetteten, an eine Spannungsquelle anschließbaren metallischen Leitdrähten aufweist, der mindestens eine Abschnitt des selbstregelnden Polymerheizkabels dergestalt an einer sich über zumindest einen wesentlichen Teil der Höhe des Innenraumes des Additivbehälters erstreckenden Trägerstruktur fixiert ist, dass sich auf unterschiedlichen Höhen des Innenraumes des Additivbehälters Polymerheizkabel befindet, und die Trägerstruktur topfförmig mit einer Wand und einem Boden ausgeführt und in den Innenraum des Additivbehälters hineinragend dergestalt mit der Behälterwand verbunden ist, dass ihr Innenraum gegenüber dem übrigen Innenraum des Additivbehälters dicht abgeschlossen ist.

Bei dem erfindungsgemäßen Additivbehälter für ein der KFZ-Abgasreinigung dienendes SCR-System ist demnach die Heizeinheit, die der Erwärmung des in dem Behälter bevorrateten Additivs dient, um dieses vor dem Einfrieren zu bewahren bzw. um eingefrorenes Additiv wieder zu verflüssigen, durch mehrere synergetisch funktional zusammenwirkende charakteristische Merkmale in ganz spezifischer Weise ausgeführt. Zum einen umfasst die Heizeinheit mindestens einen Abschnitt eines selbstregelnden Polymerheizkabels mit zwei mit Abstand zueinander in ein leitfähiges Polymermaterial (sog. "polymer-based conductive composite") eingebetteten, an eine Spannungsquelle anschließbaren metallischen Leitdrähten. Eine von der vorliegenden Erfindung genutzte charakteristische Eigenschaft eines solchen (als solches bekannten) Polymerheizkabels besteht in einer ausgeprägten PTC-Charakteristik aufgrund eines markanten Anstiegs des elektrischen Widerstands des Polymermaterials im Bereich der Schmelztemperatur des kristallinen Polymers. Auf diese Weise vergrößert sich bei wärmer werdendem Polymerheizkabel in einem bestimmten Temperaturbereich mehr oder weniger sprunghaft der Widerstand zwischen den beiden Leitdrähten des Polymerheizkabels, was in heißen Bereichen des Polymerheizkabels - verglichen mit dessen kalten Bereichen - einen dementsprechend reduzierten Stromfluss durch das Polymermaterial hindurch nach sich zieht. Das Polymermaterial heizt sich demzufolge dort, wo es nicht unter die weiter oben beschriebene charakteristische Umschalttemperatur gekühlt wird, nicht weiter auf. Die Heizwirkung beschränkt sich folglich auf die gekühlten Bereiche.

Diese Eigenschaft des Polymerheizkabels wird, gemäß dem zweiten für die vorliegende Erfindung charakteristischen Merkmal, dadurch zur Verbesserung der praxisrelevanten Eigenschaften des Additivbehälters genutzt, dass der mindestens eine Abschnitt des selbstregelnden Polymerheizkabels dergestalt an einer sich über zumindest einen wesentlichen Teil der Höhe des Innenraumes des Additivbehälters erstreckenden Trägerstruktur fixiert ist, dass sich auf unterschiedlichen Höhen des Innenraumes des Additivbehälters Polymerheizkabel befindet. In Abhängigkeit insbesondere von dem Flüssigkeitsspiegel des in dem Additivbehälter bevorrateten Additivs und/oder der Neigung des Fahrzeugs, in das des SCR-System eingebaut ist, taucht das Polymerheizkabel lokal in das Additiv ein, d. h. befindet sich unterhalb des Flüssigkeitsspiegels, an anderer Stelle liegt es indessen frei, d. h. befindet sich oberhalb des Flüssigkeitsspiegels. Dort, wo das Polymerheizkabel in das Additiv eintaucht, wird lokal die gebildete Wärme abgeführt, so dass die Temperatur des Polymerheizkabels dort nur geringfügig oberhalb der des Additivs liegt. Demgegenüber wird dort, wo das Polymerheizkabel frei liegt, lokal keine Wärme abgeführt; die Temperatur des Polymerheizkabels erhöht sich lokal mit der Folge, dass dort die weitere Wärmeerzeugung gedrosselt wird.

Und infolge des dritten für die Erfindung charakteristischen Merkmals, wonach die Trägerstruktur topfförmig mit einer Wand und einem Boden ausgeführt und in den Innenraum des Additivbehälters hineinragend dergestalt mit der Behälterwand verbunden ist, dass ihr Innenraum gegenüber dem übrigen Innenraum des Additivbehälters dicht abgeschlossen ist, ist die topfförmige Trägerstruktur nur einseitig, nämlich außen von Additiv umspült. Dies gestattet beispielsweise, dass die Leitdrähte des mindestens einen Abschnitts des Polymerheizkabels im "trockenen" Innenraum der topfförmigen Trägerstruktur enden können. Hier kann sich (typischerweise in Form einer geeigneten Steckerverbindung) der Anschluss des Polymerheizkabels an die Fahrzeugelektrik befinden.

So tragen die für den erfindungsgemäßen Additivbehälter charakteristischen Merkmale im synergetischen Zusammenwirken miteinander dazu bei, eine Überhitzung des Heizsystems bei einem zur Neige gehenden Additivvorrat und/oder bei schräg stehendem Fahrzeug zu verhindern. Für die Betriebssicherheit und Zuverlässigkeit der Heizeinheit ist das ein bedeutender Vorteil gegenüber dem Stand der Technik. Auch auf die Betriebssicherheit des SCR-Systems als ganzes hat dies positive Auswirkungen; denn infolge der gesteigerten Sicherheit der Heizeinheit gegen Überhitzung kann - gegenüber dem Stand der Technik - die maximale Heizleistung der Heizeinheit gesteigert werden, was der Betriebssicherheit des SCR-Systems nützt.

In bevorzugter Weiterbildung erstreckt sich dabei der mindestens eine Abschnitt des Polymerheizkabels zumindest überwiegend, besonders bevorzugt vollständig in dem Innenraum der Trägerstruktur, insbesondere indem sich das Polymerheizkabel zumindest teilweise schraubenförmig entlang der Wand der Trägerstruktur erstreckt. Durch die Anordnung des Polymerheizkabels in dem "trockenen" Innenraum der Trägerstruktur kann auf aufwändige Beschichtungen oder sonstige Schutzmaßnahmen für das Polymerheizkabel verzichtet werden; und durch die schraubenförmig gewendelte Verlegung des Polymerheizkabels an der Innenseite der Wand der topfförmigen Trägerstruktur, durch die hindurch die erzeugte Wärme in das Additiv hinein übertragen wird, lässt sich - über ein entsprechend langes Polymerheizkabel - eine hohe maximale Heizleistung bereitstellen. Besonders vorteilhaft ist dabei, wenn die topfförmige Trägerstruktur einen gegenüber der Wand erweiterten Flansch aufweist, wobei sich das Polymerheizkabel weiterhin entlang des Flansches der Trägerstruktur erstreckt; denn in diesem Falle stellen sich besonders günstige thermische Effekte ein.

Im Hinblick auf eine maximale Wärmeausbeute kann vorteilhaft sein, wenn, gemäß einer anderen bevorzugten Weiterbildung der Erfindung, ein einziger durchgehender Abschnitt des Polymerheizkabels vorgesehen ist. Je nach der Geometrie der Trägerstruktur kann sich indessen, gemäß einer alternativen bevorzugten Weiterbildung, auch als günstig erweisen, wenn mindestens zwei elektrisch in Reihe geschaltete Abschnitte des Polymerheizkabels mit durchgehenden metallischen Leitdrähten vorgesehen sind, wobei die metallischen Leitdrähte zwischen jeweils zwei benachbarten Abschnitten des Polymerheizkabels mit relativ starker Krümmung gebogen sind. Bei dieser Ausgestaltung besteht, mit anderen Worten, zwischen zwei Abschnitten, in denen die beiden metallischen Leitdrähte in Polymermaterial eingebettet sind, ein Stück, in dem das Polymermaterial fehlt. Dort liegen die beiden metallischen Leitdrähte mehr oder weniger frei, ggf. nur durch eine Isolierung geschützt. In dem zuletzt genannten Bereich lassen sich die beiden metallischen Leitdrähte, insbesondere um sie an die Gestalt der Trägerstruktur anzupassen, mit engem Biegeradius verformen, was in den Bereichen, in denen die Leitdrähte in das leitfähige Polymermaterial eingebettet sind, nicht der Fall ist.

Eine andere bevorzugte Weiterbildung der Erfindung zeichnet sich dadurch aus, dass eine Mehrzahl von elektrisch zueinander parallel geschalteten einzelnen Abschnitten des Polymerheizkabels vorgesehen ist. Durch die elektrotechnische Parallelschaltung der einzelnen Abschnitte des Polymerheizkabels kann die Zuverlässigkeit des Heizsystems günstig beeinflusst werden; denn eine örtliche Schädigung des Polymerheizkabels, indem beispielsweise einer der beiden Leitdrähte unterbrochen ist, wirkt sich nur auf den betreffenden einzelnen Abschnitt aus, nicht indessen auf das gesamte Polymerheizkabel. Die einzelnen Abschnitte des Polymerheizkabels können dabei insbesondere im Wesentlichen parallel zueinander orientiert an der Trägerstruktur fixiert sein. Und für ihre Anbindung an die Fahrzeugelektrik können insbesondere zwei ringförmige, als Verteiler wirkende Anschlussleiter vorgesehen sein, an welche die metallischen Leitdrähte der Abschnitte des Polymerheizkabels angeschlossen sind. Für eine besonders kompakte Gestaltung der Heizeinheit können, in abermals bevorzugter Weiterbildung, die beiden ringförmigen Anschlussleiter radial zueinander versetzt sein.

Eine wiederum andere bevorzugte Weiterbildung der Erfindung zeichnet sich dadurch aus, dass die Trägerstruktur mindestens einen den mindestens einen Abschnitt des Polymerheizkabels aufnehmenden Kanal aufweist. Das erweist sich insbesondere dann als vorteilhaft, wenn die Heizeinheit im vorstehenden Sinne mehrere einzelne, dementsprechend vergleichsweise kurze Polymerheizkabel-Abschnitte umfasst. Der Kanal kann dabei insbesondere hinterschnitten sein, so dass ein vergleichsweise großer wärmeübertragender Oberflächenkontakt zwischen dem Polymerheizkabel und der Trägerstruktur besteht. Dies gilt insbesondere dann, wenn das Polymerheizkabel auf der trockenen Seite der Trägerstruktur verlegt ist, so dass die Wärmeübertragung von der Heizeinheit in die in dem Additivbehälter bevorratete Flüssigkeit hinein durch das Material der Trägerstruktur hindurch erfolgt.

Während weiter oben dargelegt wurde, dass typischerweise eine Verlegung des Polymerheizkabels in dem "trockenen" Bereich der Trägerstruktur günstig sein kann, so kann umgekehrt unter bestimmten Voraussetzungen die Verlegung des Polymerheizkabels auf der "nassen" Seite der Trägerstruktur zu bevorzugen sein. Denn bei dieser Weiterbildung, bei der sich das mindestens eine Polymerheizkabel zumindest überwiegend an der deren Innenraum abgewandten Oberfläche der Trägerstruktur erstreckt, ergibt sich ein verbesserter Wärmeeintrag von dem Polymerheizkabel in das dieses umspülende Additiv. Allerdings ergibt sich in diesem Falle ein Bedarf für eine verbesserte Schutzausstattung des Polymerheizkabels gegen eine Schädigung durch das Additiv. Bevorzugt weist das Polymerheizkabel in diesem Sinne eine gegenüber AdBlue resistente Beschichtung auf.

Auch bei einer "nassen" Verlegung des Polymerheizkabels ist im Übrigen wieder günstig, wenn die Leitdrähte des Polymerheizkabels im "trockenen" Innenraum der Trägerstruktur enden, um dort an die Fahrzeugelektrik angeschlossen zu werden. So ist das Polymerheizkabel in diesem Falle besonders bevorzugt dicht durch die Wand der Trägerstruktur hindurchgeführt. Auch bei einer "nassen" Verlegung des Polymerheizkabels erstreckt sich dieses, gemäß einer bevorzugten Weiterbildung, schraubenförmig entlang der Wand der Trägerstruktur. Und auch hier weist besonders bevorzugt die Trägerstruktur einen gegenüber der Wand erweiterten Flansch auf, wobei sich das Polymerheizkabel weiterhin entlang des Flansches der Trägerstruktur erstreckt. Für die sich auf diese Weise erzielbaren Vorteile gelten die obigen Ausführungen zur "trockenen" Verlegung des Polymerheizkabels in entsprechender Weise.

Im Folgenden wird die vorliegende Erfindung anhand dreier in der Zeichnung veranschaulichter bevorzugter Ausführungsbeispiele näher erläutert. Nachdem es für die vorliegende Erfindung allein auf die Heizeinheit ankommt, nicht indessen auf sonstige Merkmale des Additivbehälters, der vielmehr im Übrigen nach dem Stand der Technik ausgeführt sein kann, zeigt dabei
- Fig. 1: in einer ersten Ansicht die Heizeinheit eines ersten bevorzugten Beispiels eines nach der Erfindung ausgeführten Additivbehälters,
- Fig. 2: in einer zweiten Ansicht die Heizeinheit nach Fig. 1,
- Fig. 3: in einer ersten Ansicht die Heizeinheit eines zweiten bevorzugten Beispiels eines nach der Erfindung ausgeführten Additivbehälters,
- Fig. 4: in einer zweiten Ansicht die Heizeinheit nach Fig. 3 und
- Fig. 5: in die Heizeinheit eines dritten bevorzugten Beispiels eines nach der Erfindung ausgeführten Additivbehälters.

Der jeweilige (nicht dargestellte) Additivbehälter, der für ein der KFZ-Abgasreinigung dienendes SCR-System bestimmt und in dem jeweils die in der Zeichnung gezeigte Heizeinheit 1 verbaut ist, umfasst in als solches bekannter Weise eine Behälterwand, welche einen der Aufnahme des Additivs (insbesondere AdBlue ®) dienenden Innenraum umschließt, eine Pump- und Dosiereinheit sowie eben eine hier detailliert erläuterte elektrische Heizeinheit 1.

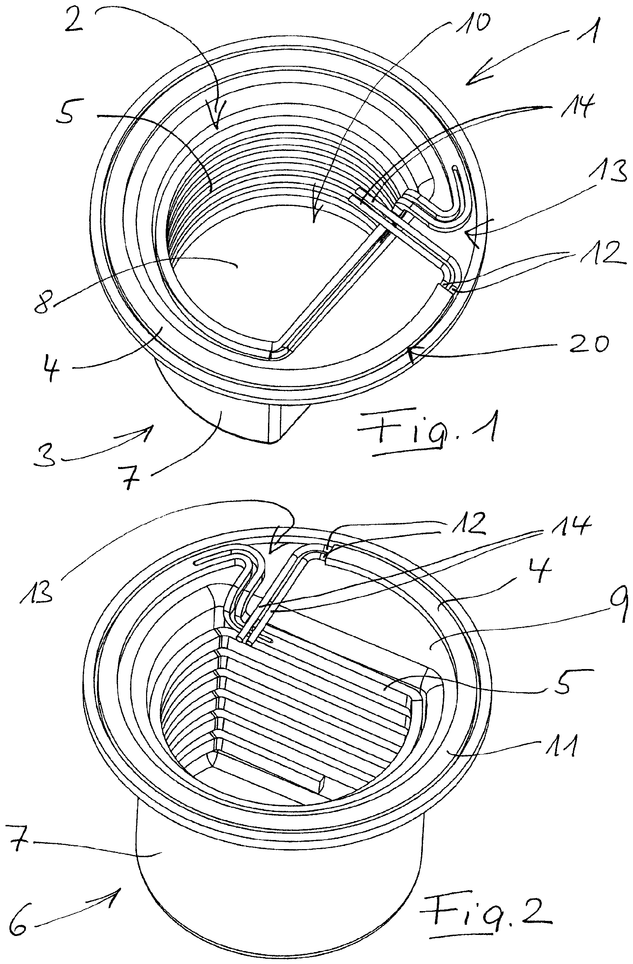

Die Heizeinheit 1 umfasst jeweils einen elektrischen Wärmeerzeuger 2 in Form mindestens eines an einer Trägerstruktur 3 fixierten Abschnitts 4, 5 eines selbstregelnden Polymerheizkabels 20. Die Trägerstruktur 3 ist dabei (vgl. Fig. 1 -5) im Wesentlichen hutförmig ausgeführt, d. h. sie weist einen topfförmig ausgeführten Bereich 6 auf. Dieser umfasst eine (vorliegend in Form eines einseitig abgeflachten Zylinders ausgeführte) Wand 7 und einen (stirnseitigen) Boden 8. Gegenüber dem Boden 8 geht die Wand 7 in einen radial nach außen ragenden Flansch 9 über. Dieser Flansch 9 dient der Befestigung der Trägerstruktur 3 an der Behälterwand in der Weise, dass die bodenseitige Behälterwand des Additivbehälters einen Durchbruch aufweist, durch welchen hindurch die Trägerstruktur 3 mit ihrem topfförmigen Bereich 6 in den Innenraum des Additivbehälters hineinragt. Der Flansch 9 der Trägerstruktur 3 liegt dabei, den besagten Durchbruch umgebend, dichtend an der bodenseitigen Behälterwand des Additivbehälters an. In dem betreffenden ringförmigen Überlappungsbereich erfolgt in üblicher Weise (beispielsweise mittels Schrauben) eine Befestigung der Trägerstruktur 3 (an deren Flansch) an der Behälterwand. Die Dimension der Trägerstruktur 3 ist dabei dergestalt auf die Dimension des Additivbehälters abgestimmt, dass sich der topfförmige Bereich 6 der Trägerstruktur 3 über zumindest einen wesentlichen Teil der Höhe des Innenraumes des Additivbehälters erstreckt.

Bei dieser Anordnung der Trägerstruktur 3 weist diese einerseits eine trockene und andererseits eine nasse Seite auf, indem der topfförmige Bereich 6 der Trägerstruktur 3 zwar außen von in dem Additivbehälter aufgenommener Flüssigkeit umspült ist, die allerdings nicht in den Innenraum 10 des topfförmigen Bereichs 6 der Trägerstruktur 3 gelangt.

Der mindestens eine Abschnitt 4, 5 des selbstregelnden Polymerheizkabels umfasst, wie als solches bekannt, zwei mit Abstand zueinander in ein leitfähiges Polymermaterial 11 eingebettete metallische Leitdrähte 12. Bei dem Ausführungsbeispiel nach den Figuren 1 und 2 umfasst die Heizeinheit 1 zwei derartige Polymerheizkabel-Abschnitte 4, 5, die beide vollständig auf der trockenen Seite der Trägerstruktur 3 verlegt sind. Ein erster Abschnitt 4 erstreckt sich etwa kreisbogenförmig über einen westlichen Teil des Flansches 9; er verläuft somit nahe der bodenseitigen Behälterwand. Ein zweiter Abschnitt 5 des selbstregelnden Polymerheizkabels erstreckt sich schraubenförmig gewendelt entlang Wand 7 des topfförmigen Bereichs 6 der Trägerstruktur auf der (trockenen) Innenseite. Zwischen dem ersten Abschnitt 4 und dem zweiten Abschnitt 5 des selbstregelnden Polymerheizkabels ist in einem Übergangsbereich 13 das Polymermaterial, in welches die beiden Leitdrähte 12 ansonsten eingebettet sind, weitgehend entfernt, so dass die beiden Leitdrähte 12 hier, d. h. im Bereich des Übergangs vom Flansch 9 zum topfförmigen Bereich 6 der Trägerstruktur 3 mit engen Biegeradien an die Geometrie der Trägerstruktur 3 angepasst verlaufen können. Die beiden Polymerheizkabel-Abschnitte 4 und 5 sind auf diese Weise elektrisch in Reihe geschaltet. Die Leitdrähte 12 enden, aus dem ersten Abschnitt 4 des Polymerheizkabels heraus ragend, im Innenraum 10 der Trägerstruktur; die entsprechenden frei liegenden Endabschnitte 14 sind dort an die Fahrzeugelektrik anschließbar bzw. angeschlossen.

Indem sich der zweite Abschnitt 5 des Polymerheizkabels schraubenförmig gewendelt entlang der Wand 7 des topfförmigen Bereichs 6 der Trägerstruktur 3 erstreckt, befindet sich Polymerheizkabel auf unterschiedlichen Höhen des Innenraumes des Additivbehälters, so dass sich bei einem entsprechenden Füllstand der in dem Additivbehälter bevorrateten Flüssigkeit das Polymerheizkabel der Heizeinheit typischerweise teilweise unterhalb und teilweise oberhalb des Flüssigkeitsspiegels befindet.

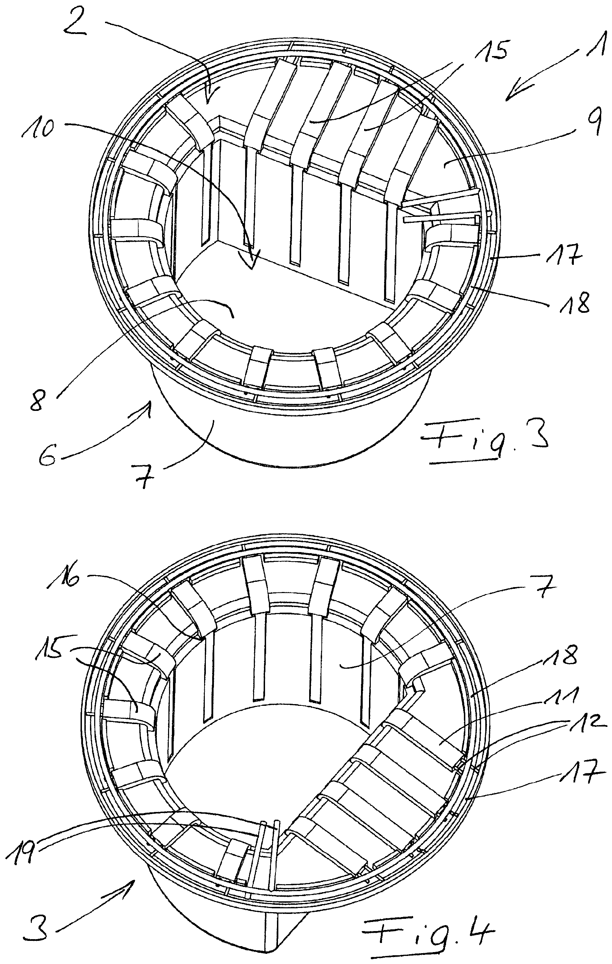

Das in den Figuren 3 und 4 veranschaulichte Ausführungsbeispiel unterscheidet sich von dem vorstehend beschriebenen nach den Figuren 1 und 2 insbesondere wie folgt: Die Heizeinheit 1 umfasst hier eine größere Anzahl (beispielsweise 14) einzelne Polymerheizkabel-Abschnitte 15. Diese erstrecken sich entlang des Flansches 9 (auf dessen trockener Innenseite) etwa radial und entlang der Wand 7 des topfförmigen Bereichs 6 der Trägerstruktur 3 (ebenfalls auf dessen trockener Innenseite) etwa axial, d. h. im Wesentlichen parallel zueinander orientiert. Hierzu sind an der Wand 7 des topfförmigen Bereichs 6 der Trägerstruktur 3 hinterschnittene Kanäle 16 ausgeführt, in denen die Polymerheizkabel-Abschnitte 15 aufgenommen sind.

Die Polymerheizkabel-Abschnitte 15 sind dabei elektrisch zueinander parallel geschaltet. Hierzu sind benachbart dem Flansch 9 der Trägerstruktur 3 zwei - radial zueinander versetzte - ringförmige Anschlussleiter 17, 18 vorgesehen, an welche die metallischen Leitdrähte 12 der Polymerheizkabel-Abschnitte 14 angeschlossen sind. Jeder der beiden ringförmigen Anschlussleiter 17, 18 verfügt über einen in den Innenraum 10 der Trägerstruktur 3 hinein ragenden Anschlusskontakt 19. Diese sind an die Fahrzeugelektrik anschließbar bzw. angeschlossen.

Im Übrigen erschießt sich das Ausführungsbeispiel nach den Figuren 3 und 4 aus der vorstehenden Erläuterung des Ausführungsbeispiels nach den Figuren 1 und 2.

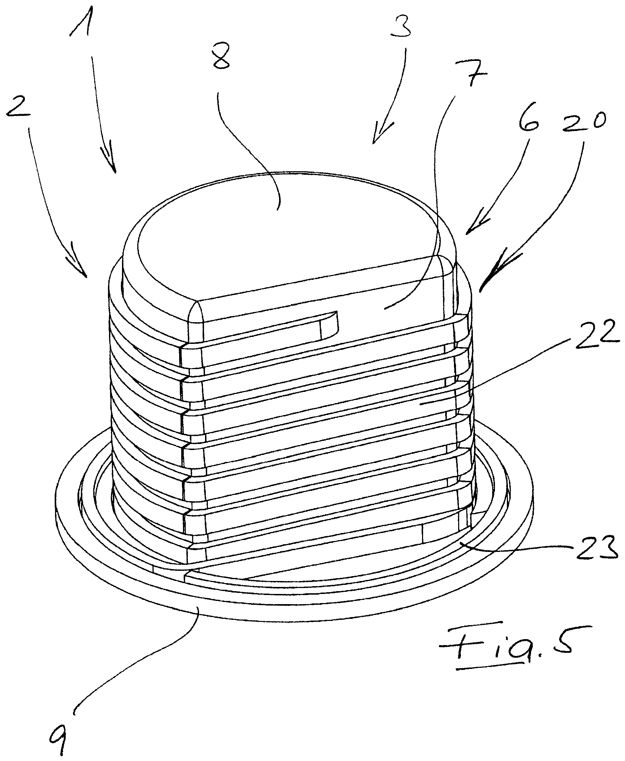

Das in Fig. 5 veranschaulichte Ausführungsbeispiel unterscheidet sich von den beiden vorstehend beschriebenen insbesondere wie folgt: Hier verläuft das Polymerheizkabel 20 weitestgehend an der dem Innenraum der Trägerstruktur 3 abgewandten (nassen) Oberfläche 21 der Trägerstruktur 3. Und zwar erstreckt sich hier ein einziger Polymerheizkabel-Abschnitt 22 durchgehend zunächst über eine Windung 23 entlang des Flansches 9 und sodann schraubenförmig gewendelt entlang der Wand 7 des topfförmigen Bereichs 6 der Trägerstruktur 3. Erst unmittelbar vor dem Boden 8 des topfförmigen Bereichs 6 der Trägerstruktur 3 ist das Polymerheizkabel 20 dicht durch die Wand 7 der Trägerstruktur 3 hindurchgeführt, so dass die Leitdrähte des Polymerheizkabels 20 im trockenen Innenraum der Trägerstruktur 3 enden. Dort erfolgt in oben beschriebener Weise der elektrische Anschluss der Heizeinheit 1 an die Fahrzeugelektrik.

Bei diesem Ausführungsbeispiel weist das Polymerheizkabel 20 eine gegenüber AdBlue ® resistente Beschichtung auf.

## Patentansprüche

1. Additivbehälter für ein der KFZ-Abgasreinigung dienendes SCR-System, umfassend eine einen Innenraum umschließende Behälterwand, eine Pump- und Dosiereinheit sowie eine elektrische Heizeinheit (1), mit folgenden Merkmalen:
die Heizeinheit (1) weist mindestens einen Abschnitt (4, 5; 15; 22) eines selbstregelnden Polymerheizkabels (20) mit zwei mit Abstand zueinander in ein leitfähiges Polymermaterial (11) eingebetteten, an eine Spannungsquelle anschließbaren metallischen Leitdrähten (12) auf;
der mindestens eine Polymerheizkabel-Abschnitt (4, 5; 15; 22) ist dergestalt an einer sich über zumindest einen wesentlichen Teil der Höhe des Innenraumes des Additivbehälters erstreckenden Trägerstruktur (3) fixiert, dass sich auf unterschiedlichen Höhen des Innenraumes des Additivbehälters Polymerheizkabel (20) befindet;
die Trägerstruktur (3) umfasst einen topfförmig ausgeführten Bereich (6) mit einer Wand (7) und einem Boden (8) und ist in den Innenraum des Additivbehälters hineinragend dergestalt mit der Behälterwand verbunden, dass ihr Innenraum (10) gegenüber dem übrigen Innenraum des Additivbehälters dicht abgeschlossen ist.

2. Additivbehälter nach Anspruch 1, **dadurch gekennzeichnet, dass** die Leitdrähte (12) des mindestens einen Polymerheizkabel-Abschnitts (4, 5; 15; 22) im Innenraum (10) der Trägerstruktur (3) enden.

3. Additivbehälter nach Anspruch 1 oder Anspruch 2, **dadurch gekennzeichnet, dass** sich der mindestens eine Polymerheizkabel-Abschnitt (4, 5; 15) zumindest überwiegend in dem Innenraum (10) der Trägerstruktur (3) erstreckt.

4. Additivbehälter nach Anspruch 3, **dadurch gekennzeichnet, dass** sich das Polymerheizkabel (20) zumindest teilweise schraubenförmig entlang der Wand (7) des topfförmigen Bereichs (6) der Trägerstruktur (3) erstreckt.

5. Additivbehälter nach Anspruch 4, **dadurch gekennzeichnet, dass** die Trägerstruktur (3) einen gegenüber der Wand (7) des topfförmigen Bereichs (6) erweiterten Flansch (9) aufweist, wobei sich das Polymerheizkabel (20) weiterhin entlang des Flansches (9) der Trägerstruktur (3) erstreckt.

6. Additivbehälter nach einem der Ansprüche 1 bis 5, **dadurch gekennzeichnet, dass** ein einziger durchgehender Polymerheizkabel-Abschnitt (22) vorgesehen ist.

7. Additivbehälter nach einem der Ansprüche 1 bis 5, **dadurch gekennzeichnet, dass** mindestens zwei elektrisch in Reihe geschaltete Polymerheizkabel-Abschnitte (4, 5) mit durchgehenden metallischen Leitdrähten (12) vorgesehen sind, wobei die metallischen Leitdrähte (12) zwischen jeweils zwei benachbarten Polymerheizkabel-Abschnitten (4, 5) mit relativ starker Krümmung gebogen sind.

8. Additivbehälter nach einem der Ansprüche 1 bis 3, **dadurch gekennzeichnet, dass** eine Mehrzahl von elektrisch zueinander parallel geschalteten einzelnen Polymerheizkabel-Abschnitten (15) vorgesehen ist.

9. Additivbehälter nach Anspruch 8, **dadurch gekennzeichnet, dass** die einzelnen Abschnitte (15) des Polymerheizkabels (20) zumindest bereichsweise im Wesentlichen parallel zueinander orientiert an der Trägerstruktur (3) fixiert sind.

10. Additivbehälter nach Anspruch 8 oder Anspruch 9, **dadurch gekennzeichnet, dass** zwei ringförmige Anschlussleiter (17, 18) vorgesehen sind, an welche die metallischen Leitdrähte (12) der Polymerheizkabel-Abschnitte (15) angeschlossen sind.

11. Additivbehälter nach Anspruch 10, **dadurch gekennzeichnet, dass** die beiden ringförmigen Anschlussleiter (17, 18) radial zueinander versetzt sind.

12. Additivbehälter nach einem der Ansprüche 1 bis 5, **dadurch gekennzeichnet, dass** die Trägerstruktur (3) mindestens einen den mindestens einen Polymerheizkabel-Abschnitt (4, 5; 15; 22) aufnehmenden Kanal (16) aufweist.

13. Additivbehälter nach Anspruch 1 oder Anspruch 2, **dadurch gekennzeichnet, dass** sich das Polymerheizkabel (20) zumindest überwiegend an der deren Innenraum (10) abgewandten Oberfläche der Trägerstruktur (3) erstreckt.

14. Additivbehälter nach Anspruch 13, **dadurch gekennzeichnet, dass** sich das Polymerheizkabel (20) schraubenförmig entlang der Wand (7) des topfförmigen Bereichs (6) der Trägerstruktur (3) erstreckt.

15. Additivbehälter nach Anspruch 13 oder Anspruch 14, **dadurch gekennzeichnet, dass** das Polymerheizkabel (20) eine gegenüber AdBlue resistente Beschichtung aufweist.

16. Additivbehälter nach einem der Ansprüche 13 bis 15, **dadurch gekennzeichnet, dass** das Polymerheizkabel (20) dicht durch die Wand (7) des topfförmigen Bereichs (6) der Trägerstruktur (3) hindurchgeführt ist, so dass die Leitdrähte (12) des Polymerheizkabels (20) im Innenraum (10) der Trägerstruktur (3) enden.

17. Additivbehälter nach einem der Ansprüche 13 bis 16, **dadurch gekennzeichnet, dass** die Trägerstruktur (3) einen gegenüber der Wand (7) des topfförmigen Bereichs (6) erweiterten Flansch (9) aufweist, wobei sich das Polymerheizkabel (20) weiterhin entlang des Flansches (9) der Trägerstruktur (3) erstreckt.
